# EUROPÄISCHE PATENTANMELDUNG

(11) **EP 3 726 799 A1**
(43) Veröffentlichungstag der Anmeldung: **21.10.2020**
(21) Anmeldenummer: 19169499.1
(22) Anmeldetag: 16.04.2019
(51) Int. Cl.: H04L 29/06, G05B 19/406, G06N 20/00

(54) **VERFAHREN UND VORRICHTUNG ZUM ERKENNEN EINER MANIPULATION EINER MASCHINE UND SYSTEM MIT DER VORRICHTUNG**

(71) Anmelder: Siemens Aktiengesellschaft, 80333 München (DE)
(72) Erfinder: Barthel, Marko, 90411 Nürnberg (DE); Frimberger, Tina, 92711 Parkstein (DE); Meierhofer, Florian, 92421 Schwandorf (DE)

(57) **Zusammenfassung**

Es wird ein Verfahren zum Erkennen einer Manipulation einer Maschine (10), insbesondere durch einen Benutzer, während eines Arbeitsvorganges der Maschine (10) vorgeschlagen. Das Verfahren umfasst die Schritte:
a) Erfassen von Maschinendaten während des Arbeitsvorganges der Maschine (10) mittels einer Erfassungs-Einheit (11),
b) Übertragen der erfassten Maschinendaten von der Erfassungs-Einheit (11) zu einer Speicher-Einheit (13),
c) Bereitstellen von Referenzdaten mittels der Speicher-Einheit (13), wobei die Referenzdaten vorbestimmte Muster des Arbeitsvorganges der Maschine (10) umfassen,
d) Vergleichen der übertragenen erfassten Maschinendaten mit den bereitgestellten Referenzdaten, um ein Vergleichsergebnis zu erhalten, und
e) Durchführen einer Aktion in Abhängigkeit davon, ob das Vergleichsergebnis angibt, dass eine bestimmte Abweichung zwischen den übertragenen erfassten Maschinendaten und den bereitgestellten Referenzdaten vorliegt.

Durch das bereitgestellte Verfahren werden Manipulationen an der Maschine, welche durch einen Benutzer verursacht werden, zuverlässig erkannt.

## Beschreibung

Die vorliegende Erfindung betrifft ein Verfahren sowie ein Computerprogrammprodukt zum Erkennen einer Manipulation einer Maschine. Des Weiteren betrifft die vorliegende Erfindung eine Vorrichtung zum Erkennen einer Manipulation einer Maschine sowie ein System mit der Vorrichtung.

Das technische Gebiet der Erfindung betrifft die Erkennung einer Manipulation einer Maschine, insbesondere durch einen Benutzer, während eines Arbeitsvorganges der Maschine.

An vielen Maschinen gibt es eine Mehrzahl von technischen Schutzeinrichtungen, die dazu eingerichtet sind, einen Benutzer vor Gefährdungen zu schützen. So werden beispielsweise Gefahrenbereiche an Maschinen mit Schutzeinrichtungen, wie Schutztüren, Zäunen oder Klappen, und den zugehörigen Positionsschaltern überwacht oder es erfolgt eine optische Überwachung durch Laserscanner, Lichtgitter oder Lichtschranken.

Der Benutzer fühlt sich aber häufig durch diese Schutzeinrichtungen in seinen Arbeitsabläufen gestört, steht unter Zeitdruck oder hat beispielsweise durch die Schutztüren eine unzureichende Sicht auf den dahinterliegenden Prozess. Dies führt dazu, dass der Benutzer oder der Bediener damit beginnt, die Schutzeinrichtungen zu manipulieren. In der Folge kann dies zu Unfällen mit schweren Verletzungen bis insbesondere hin zum Tod des Benutzers führen.

Die Steuerung der Maschine oder die Maschinensteuerung kann diese Manipulationen herkömmlicherweise nicht erkennen, da nur statisch der Istzustand der Sensoren und Schalter abgefragt wird und mit dem Sollzustand im jeweiligen Arbeitsschritt verglichen wird. Dass sich dieser Istzustand bei bestimmten Manipulationen jedoch nie ändert, weil beispielsweise eine Ersatzbetätigung der Positionsschalter stattfindet, wird jedoch durch die Maschinensteuerung nicht erkannt.

Aktuelle Möglichkeiten, Manipulationen zu minimieren, sind insbesondere konstruktive Maßnahmen, wie ein verdeckter Einbau von Positionsschaltern oder eine ergonomische Anordnung von Bedienstellen. Mögliche technische Maßnahmen sind beispielsweise kodierte Betätiger für Positionsschalter oder Laserscanner.

Diese aktuellen Möglichkeiten erschweren zwar die Manipulation und erhöhen den Aufwand für den Benutzer für eine solche Manipulation, jedoch lassen sich auch diese Möglichkeiten durch den Benutzer manipulieren und damit ist es dem Benutzer möglich, die vorgesehenen Schutzeinrichtungen der Maschine auszuhebeln und sich dadurch selbst in Gefahr zu bringen.

Vor diesem Hintergrund besteht eine Aufgabe der vorliegenden Erfindung darin, den sicheren Betrieb einer Maschine zu verbessern.

Gemäß einem ersten Aspekt wird ein Verfahren zum Erkennen einer Manipulation einer Maschine, insbesondere durch einen Benutzer, während eines Arbeitsvorganges der Maschine vorgeschlagen. Das Verfahren umfasst die Schritte:
a) Erfassen von Maschinendaten während des Arbeitsvorganges der Maschine mittels einer Erfassungs-Einheit,
b) Übertragen der erfassten Maschinendaten von der Erfassungs-Einheit zu einer Speicher-Einheit,
c) Bereitstellen von Referenzdaten mittels der Speicher-Einheit, wobei die Referenzdaten vorbestimmte Muster des Arbeitsvorganges der Maschine umfassen,
d) Vergleichen der übertragenen erfassten Maschinendaten mit den bereitgestellten Referenzdaten, um ein Vergleichsergebnis zu erhalten, und
e) Durchführen einer Aktion in Abhängigkeit davon, ob das Vergleichsergebnis angibt, dass eine bestimmte Abweichung zwischen den übertragenen erfassten Maschinendaten und den bereitgestellten Referenzdaten vorliegt.

Durch das bereitgestellte Verfahren ist es in vorteilhafter Weise möglich, Manipulationen an der Maschine, welche durch den Benutzer verursacht und/oder durchgeführt werden, zuverlässig zu erkennen. Dadurch wird die Sicherheit des Betriebes der Maschine erhöht, da die Möglichkeiten der Manipulation der Maschine für den Benutzer erschwert werden und der tatsächliche Versuch der Manipulation, den der Benutzer vornimmt, erkannt wird.

Ein weiterer Vorteil des vorliegenden Verfahrens ist es, dass zum einen vorhersehbare Manipulationen, zum anderen aber auch unvorhersehbare Manipulationen an der Maschine zuverlässig erkannt werden können. Weiterhin ist das Verfahren insbesondere universell auf Maschinen, wie beispielsweise bereits vorhandene oder neuere Maschinen in einer Produktionsanlage, auf einfache Weise anwendbar.

Vorteilhaft ist ebenso, dass zur Durchführung des bereitgestellten Verfahrens die vorhandenen Hardwarekomponenten der Maschine weiterverwendet werden können, da lediglich eine Übertragung der erfassten Maschinendaten zu der Speicher-Einheit einzurichten ist. Dies ermöglicht eine technisch einfache Integrierbarkeit des Verfahrens in und für vorhandene Maschinen, während gleichzeitig die Sicherheit bei der Bedienung der Maschine für den Benutzer erhöht wird.

Falls das Vergleichsergebnis angibt, dass eine bestimmte Abweichung zwischen den übertragenen erfassten Maschinendaten und den bereitgestellten Referenzdaten vorliegt, wird eine Aktion eingeleitet (Schritt e)).

Die Aktion dient vorzugsweise dafür, dass der Benutzer geschützt wird und die Sicherheit für den Benutzer erhöht wird oder dass Fehler und/oder Beschädigungen an dem zu verarbeitenden Bauteil und/oder der Maschine verhindert werden. Unter einer Manipulation wird vorliegend insbesondere ein bewusster und gesteuerter Eingriff eines Benutzers in eine oder mehrere technische Schutzeinrichtungen einer Maschine verstanden, um die technische Schutzeinrichtung oder die technischen Schutzeinrichtungen beispielsweise aus Bequemlichkeit oder aus Zeitgründen außer Kraft zu setzen. Eine technische Schutzeinrichtung umfasst insbesondere einen Sensor und/oder einen Aktuator der Maschine, wie beispielsweise Positionsschalter, Lichtgitter, Not-Halt-Schalter, Schütze, Motorstarter und/oder Antriebe.

Eine Art einer Manipulation ist beispielsweise eine manipulierte Zweihandbedienung einer Maschine, bei der es mittels der Manipulation möglich ist, dass der Benutzer mit nur einer Hand anstatt mit zwei Händen die Maschine bedienen kann. Eine weitere Art der Manipulation ist eine Manipulation eines Positionsschalters durch den Benutzer, welcher gelöst wird, so dass der Positionsschalter nie betätigt wird oder welcher beispielsweise mittels eines Kabelbinders derart manipuliert wird, dass der Positionsschalter dauerhaft betätigt wird, um die Schutzeinrichtung gezielt zu umgehen.

Die Maschine ist insbesondere eine technische Vorrichtung mit durch ein Antriebssystem bewegten Teilen. Die Maschine ist beispielsweise dazu eingerichtet, zugeführte Energie in Bewegung umzusetzen und/oder eine Bearbeitung eines Materials, wie bohren, drehen, fräsen, heben, senken, schneiden, waschen, messen und/oder saugen durchzuführen. Ferner kann die Maschine innerhalb der Versorgungstechnik eines Gebäudes angeordnet sein. Die Maschine kann Aktuatoren und/oder Sensoren enthalten, die insbesondere für Aufzüge, Lüftungsanlagen, Kältemaschinen und/oder Klimaanlagen verwendet werden. Somit werden unter dem Begriff "Maschine" insbesondere folgende Untergruppen von Maschinen zusammengefasst: eine Arbeitsmaschine, eine Kraftmaschine, eine Werkzeugmaschine, eine Sondermaschine, ein Motor und/oder ein Antrieb.

Der Benutzer ist insbesondere ein Benutzer oder ein Bediener, der zumindest während oder für einen Arbeitsvorgang mit der Maschine arbeitet, die Maschine steuert und/oder diese bedient.

Der Arbeitsvorgang der Maschine ist vorzugsweise ein Arbeitsvorgang, während welchem Aktuatoren und/oder Sensoren der Maschine mittels einer Ansteuerung durch den Benutzer oder durch ein Steuerungssignal eine technische Operation durchführen, um ein bestimmtes Ergebnis zu erzielen. Eine Operation ist beispielsweise ein Bohr-, ein Dreh-, ein Fräs-, ein Hebe-, ein Senk-, ein Schneid-, ein Wasch-, ein Mess-, ein Saugvorgang und/oder weitere technische Operationen, die von einer Maschine durchgeführt werden können.

Maschinendaten, insbesondere erfasste Maschinendaten, sind Daten von Aktuatoren und/oder Sensoren von zumindest einer Maschine, welche während eines Arbeitsvorganges der Maschine aufgezeichnet und gespeichert werden.

Gemäß einer Ausführungsform wird die Aktion bei einem Vorliegen der bestimmten Abweichung durchgeführt, wobei die Aktion bei dem Vorliegen der bestimmten Abweichung ein Ausgeben einer Meldung an die Maschine, ein Unterbinden einer Freigabe eines Starts der Maschine, eine sofortige Abschaltung der Maschine und/oder ein Protokollieren der Aktion und/oder der bestimmten Abweichung umfasst.

Die bestimmte Abweichung wird insbesondere durch den Vergleich der übertragenen erfassten Maschinendaten mit den bereitgestellten Referenzdaten über das Vergleichsergebnis erhalten. Die bestimmte Abweichung ist beispielsweise derart definiert, dass ein oder mehrere zulässige Intervalle mittels der Referenzdaten, vorzugsweise der vorbestimmten Muster, definiert werden. Befinden sich Datenwerte der erfassten Maschinendaten außerhalb des oder der mehreren zulässigen Intervalle, liegt insbesondere eine bestimmte Abweichung vor.
Bei dem Ausgeben der Meldung an die Maschine kann die Meldung an einem Display ausgeben werden, welches an, in oder bei der Maschine angeordnet ist und mit dieser verbunden ist. Insbesondere kann die Meldung auch an einen Leitstand oder eine Steuerungs- oder Sicherheitszentrale weitergeleitet werden. Bei anhaltendem Zustand der Manipulation kann zusätzlich die Maschine nach einer bestimmten Zeitdauer gestoppt werden.

Auch kann eine Freigabe eines Starts eines Arbeitsvorganges unterbunden werden und/oder eine sofortige Beendigung eines Arbeitsvorganges der Maschine erzwungen werden.

Unter dem Protokollieren werden insbesondere ein Aufzeichnen und ein Speichern des Arbeitsvorgangs, der Aktion, der bestimmten Abweichung und/oder des Betriebes der Maschine verstanden.

Beispielsweise wird bei einem Nichtvorhandensein einer bestimmten Abweichung ebenfalls der Arbeitsvorgang oder der Betrieb der Maschine aufgezeichnet und gespeichert.

Gemäß einer weiteren Ausführungsform werden die Maschinendaten in Schritt a) kontinuierlich während eines Betriebes der Maschine mittels der Erfassungs-Einheit erfasst, wobei der Betrieb der Maschine zumindest den Arbeitsvorgang umfasst.

Insbesondere werden die Maschinendaten ununterbrochen oder kontinuierlich während des Betriebes der Maschine oder während eines Arbeitsvorganges gezielt mittels der Erfassungs-Einheit erfasst, aufgezeichnet und gespeichert.

Gemäß einer weiteren Ausführungsform ist die Speicher-Einheit zum Speichern der erfassten Maschinendaten als eine lokale Speicher-Einheit oder als eine externe Speicher-Einheit ausgebildet, wobei die erfassten Maschinendaten von der Erfassungs-Einheit zu der lokalen oder der externen Speicher-Einheit über eine Kommunikationsstrecke übertragen werden.

Die jeweilige Einheit, zum Beispiel die Erfassungs-Einheit oder die Speicher-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die lokale Speicher-Einheit ist insbesondere als eine zentrale oder dezentrale Maschinensteuerung oder als ein Edge-Device ausgebildet.

Die externe Speicher-Einheit ist vorzugsweise ein Server, eine mit dem Internet verbundene Speicher-Einheit oder eine Cloud.

Insbesondere wird die Aktion bei Vorliegen der bestimmten Abweichung auf Basis eines Steuerungsbefehls der Speicher-Einheit an die Maschine, insbesondere der externen Speicher-Einheit, durchgeführt.

Die Kommunikationsstrecke ist insbesondere drahtgebunden, optisch und/oder drahtlos ausgebildet. Eine drahtgebundene Kommunikationsstrecke ist beispielsweise mittels zumindest eines elektrischen Kupferleiters in einem Schaltschrank der Maschine zwischen der Erfassungs-Einheit und der lokalen Speicher-Einheit ausgebildet. Ferner ist die Kommunikationsstrecke von der Maschine zu der Speicher-Einheit insbesondere über mehrere Meter oder mehrere Kilometer, auch über Staatsgrenzen hinweg, ausgebildet. Die Kommunikationsstrecke oder Teile der Kommunikationsstrecke sind zwischen der Erfassungs-Einheit und der Speicher-Einheit vorzugsweise in Form einer WLAN-Verbindung ("Wireless local area network"-Verbindung) über zumindest einen Router, eine Powerline-Verbindung und/oder eine drahtgebundene oder eine optische Netzwerkverbindung ausgebildet.

Auch können die Speicher-Einheit und die Erfassungs-Einheit in der Nähe der Maschine, innerhalb der Maschine oder innerhalb der Maschinensteuerung angeordnet sein. Vorzugsweise ist die Kommunikationsstrecke als ein Netzwerk ausgebildet oder Teil eines Netzwerks, über welches die Erfassungs-Einheit und die Speicher-Einheit erfasste Maschinendaten übertragen. Beispielsweise ist die Erfassungs-Einheit in einer RechenEinheit, wie einem Computer, in der Nähe, an der Maschine oder in der Maschinensteuerung angeordnet, während die Speicher-Einheit auf einem Server oder einer Cloud ausgebildet ist.

Gemäß einer weiteren Ausführungsform umfassen die vorbestimmten Muster zeitliche Muster. Dabei weisen die zeitlichen Muster ein erstes zeitliches Muster von unterschiedlichen Betätigungszeitpunkten der Maschine durch einen Benutzer und/oder ein zweites zeitliches Muster von unterschiedlichen Zuständen von Maschinenelementen zu einem bestimmten Zeitpunkt auf.

Das erste zeitliche Muster wird insbesondere anhand des nachfolgenden Beispiels bei einer Presse mit Zweihandbedienung genauer verdeutlicht.

Hierbei wird vorzugsweise eine Presse über eine Zweihandbedienung durch einen Benutzer gesteuert. Zu Beginn legt der Benutzer ein Werkstück in die Presse ein. Werden beide Taster der Zweihandbedienung innerhalb von 500 ms gleichzeitig betätigt, so ist sichergestellt, dass sich die Hände des Benutzers außerhalb der Presse befinden und die Presse beginnt sich somit zu senken. Löst der Benutzer die Hände von den Tastern, so hebt sich die Presse wieder und kehrt in eine Ausgangsstellung zurück. Da jedoch das Werkstück immer wieder verrutscht, kommt der Benutzer auf die Idee, die Zweihandbedienung mit einer Konstruktion zu überlisten und nur noch mit einer Hand zu betätigen, so dass der Benutzer die zweite Hand frei hat, um das Werkstück zu halten.

Die Maschinensteuerung erkennt diese Manipulation nicht, da beide Taster der Zweihandbedienung weiterhin gleichzeitig innerhalb von 500 ms betätigt werden und startet den Pressvorgang.

Mittels der Referenzdaten, welche in der Speicher-Einheit bereitgestellt sind, insbesondere durch die vorbestimmten Muster, wie dem ersten zeitlichen Muster, wird erkannt, dass bei der Betätigung durch den Benutzer die beiden Taster der Zweihandbedienung jedes Mal zu unterschiedlichen Zeitpunkten betätigt werden. Beispielsweise liegen 30 ms, 50 ms oder 100 ms zwischen den Betätigungen. Somit ist die Betätigung der beiden Taster der Zweihandbedienung durch den Benutzer Schwankungen unterworfen.

Wird nun insbesondere die Konstruktion durch den Benutzer manipuliert, fallen diese Schwankungen weg, da die beiden Taster durch die Konstruktion zeitgleich betätigt werden.

Somit wird in vorteilhafter Weise durch das Fehlen der erwarteten menschlichen Schwankung in der Betätigung der beiden Taster die Manipulation durch den Benutzer erkannt und eine dementsprechende Aktion, wie ein Stoppen der Maschine, kann durchgeführt werden.

Das zweite zeitliche Muster wird insbesondere anhand des nachfolgenden Beispiels bei einer Papierwalze mit Schutzgitter genauer verdeutlicht.

Hierbei ist eine Papierwalze hinter einem Schutzgitter, welches über einen Positionsschalter überwacht wird, angeordnet. Ist das Schutzgitter geöffnet, so wird der Positionsschalter betätigt und die Papierwalze stoppt. Nur wenn das Schutzgitter wieder geschlossen ist und der Positionsschalter unbetätigt ist, kann die Papierwalze wieder gestartet werden. Da sich immer wieder Papier in der Papierwalze verklemmt, möchte der Benutzer den Prozess im laufenden Betrieb beobachten. Da das Schutzgitter die Sicht behindert, lässt der Benutzer das Schutzgitter geöffnet. Um trotzdem die Papierwalze starten zu können, schraubt der Benutzer den Positionsschalter ab, so dass dieser durch das offene Schutzgitter nicht mehr betätigt wird. Ab diesen Zeitpunkt ist ein ständiger Betrieb, unabhängig von der Stellung des Schutzgitters, möglich.

Die Steuerung der Maschine erkennt diese Manipulation nicht und ermöglicht weiterhin den Betrieb.

Mittels der Referenzdaten, welche in der Speicher-Einheit bereitgestellt sind, insbesondere durch die vorbestimmten Muster, wie das zweite zeitliche Muster, wird erkannt, dass jeden Tag am Ende der Schicht das Schutzgitter geöffnet wird. Bleibt dieser Zustand über eine bestimmte Zeitdauer aus und wird der Positionsschalter nicht mehr betätigt, obwohl die Maschine in Betrieb ist, kann aus den Referenzdaten gefolgert werden, dass eine Manipulation vorliegt.

Somit wird in vorteilhafter Weise durch den Abgleich des bestimmten Zeitpunktes, wie dem der Ende der Schicht jeden Tages und dem Zustand des Schutzgitters zu diesem Zeitpunkt, aus dem zweiten zeitlichen Muster erkannt, dass eine Manipulation durch den Benutzer vorliegt und eine dementsprechende Aktion, wie ein Stoppen der Maschine, kann durchgeführt werden.

Gemäß einer weiteren Ausführungsform umfassen die vorbestimmten Muster ein Betätigungs-Muster, welches bestimmte Betätigungsreihenfolgen von Betätigungen von Maschinenelementen während zumindest des Arbeitsvorgangs aufweist.

Das Betätigungs-Muster wird insbesondere anhand des nachfolgenden Beispiels bei einer Werkzeugmaschine mit einer Schutztür und einer Zuhaltung genauer verdeutlicht.

In der Werkzeugmaschine wird ein Metallstück bearbeitet. Der Benutzer legt das Werkstück bei geöffneter Schutztür ein, schließt dann die Schutztür und betätigt anschließend einen Start-Taster. Die Schutztür wird durch die Maschine verriegelt und das Metallstück wird bearbeitet. Nachdem die Bearbeitung abgeschlossen ist und alle beweglichen Teile zum Stillstand bekommen sind, wird die Schutztür wieder entriegelt und der Benutzer kann nachfolgend das Werkstück austauschen.

Aufgrund der langen Wartezeit bis zum Stillstand der beweglichen Teile kann der Benutzer auf den Gedanken kommen, den geschlossenen Zustand der Schutztür mit einem Ersatzbetätiger zu sichern. Die Maschinensteuerung erhält nun immer das Signal, dass die Schutztür geschlossen ist, aber der Benutzer kann jederzeit die Schutztür öffnen. Dies kann die Maschinensteuerung jedoch nicht detektieren, da nur zum Zeitpunkt des Drückens des Start-Tasters der Zustand der Schutztür abgefragt wird.

Mittels der Referenzdaten, welche in der Speicher-Einheit bereitgestellt sind, insbesondere durch das Betätigungs-Muster, wird der manipulierte Zustand erkannt, da von dem bekannten Muster "Tür ist offen, Tür wird geschlossen, Start Taster wird gedrückt, Antriebe starten, Antriebe stoppen, Tür wird geöffnet" abgewichen wird und die Tür nie geöffnet wurde. Somit liegt eine Manipulation der Maschine vor.

Damit wird in vorteilhafter Weise durch den Abgleich der Betätigungsreihenfolge erkannt, dass eine Manipulation durch den Benutzer vorliegt und eine dementsprechende Aktion, wie ein Stoppen der Maschine, kann durchgeführt werden.

Gemäß einer weiteren Ausführungsform umfassen die vorbestimmten Muster zumindest ein korreliertes Muster, welches unter Verwendung zumindest eines zeitlichen Musters und zumindest eines Betätigungs-Musters gebildet wird.

Insbesondere wird bei der Maschine die Manipulation mittels eines korrelierten Musters erkannt. Das korrelierte Muster umfasst eine Kombination aus zumindest einem Betätigungsmuster und zumindest einem zeitlichen Muster, mittels welchen eine Manipulation erkannt werden kann.

Gemäß einer weiteren Ausführungsform werden die vorbestimmten Muster durch Auswerten von in der Speicher-Einheit bereitgestellten historischen Maschinendaten und/oder aktuellen Maschinendaten und/oder durch Verwenden von selbstlernenden Algorithmen, welche auf die historischen Maschinendaten und/oder aktuellen Maschinendaten angewendet werden, gebildet.

Historische Maschinendaten sind insbesondere zeitlich ältere Maschinendaten aus einer längeren Vergangenheitsphase.

Zusätzlich können zur Erkennung von vorbestimmten Mustern selbstlernende Algorithmen verwendet werden. Selbstlernende Algorithmen umfassen insbesondere Künstliche Intelligenz, Maschinelles Lernen und sog. "Deep Learning" ("tiefes Lernen"). Die selbstlernenden Algorithmen können entweder in Kombination mit den historischen und/oder den aktuellen Maschinendaten oder durch Miteinbindung der historischen und/oder aktuellen Maschinendaten zum Trainieren eines Neuronalen Netzes des selbstlernenden Algorithmus verwendet werden.

Besonders vorteilhaft ist bei der Verwendung von selbstlernenden Algorithmen, dass auch unvorhersehbare Manipulationen erkannt werden können. Dies erhöht die Sicherheit für den Benutzer der Maschine und verhindert gleichzeitig eine Manipulation der Maschine durch den Benutzer.

Gemäß einer weiteren Ausführungsform werden die historischen Maschinendaten und/oder die aktuellen Maschinendaten zum Bilden der vorbestimmten Muster aus der Maschine der Speicher-Einheit bereitgestellt, wobei die bereitgestellten historischen Maschinendaten und/oder die bereitgestellten aktuellen Maschinendaten Sensordaten und/oder Aktuatordaten der Maschine umfassen.

Die Maschine umfasst Sensoren und Aktuatoren, aus welchen Sensordaten und/oder Aktuatordaten der Maschine gewonnen werden. Aus den Sensordaten und/oder Aktuatordaten der Maschine werden insbesondere im Laufe der Zeit die historischen Maschinendaten und/oder die aktuellen Maschinendaten zum Bilden der vorbestimmten Muster gewonnen und der Speicher-Einheit bereitgestellt.

Gemäß einer weiteren Ausführungsform werden die historischen Maschinendaten und/oder die aktuellen Maschinendaten zum Bilden der vorbestimmten Muster aus einer Mehrzahl M von Maschinen, mit M ≥ 2, der Speicher-Einheit bereitgestellt, wobei die bereitgestellten historischen Maschinendaten und/oder die bereitgestellten aktuellen Maschinendaten Sensordaten und/oder Aktuatordaten der Mehrzahl M von Maschinen umfassen.

Die historischen Maschinendaten und/oder die aktuellen Maschinendaten zum Bilden der vorbestimmten Muster werden vorzugsweise aus der Mehrzahl M von Maschinen, mit M ≥ 2, erhalten und der Speicher-Einheit bereitgestellt.

Die Mehrzahl M von Maschinen kann auch als eine Maschinenanlage bezeichnet werden. Die Maschinenanlage umfasst die Mehrzahl M von Maschinen, wobei insbesondere die Mehrzahl M von Maschinen gleichartig ist.

Dies bedeutet, dass je länger jeweils eine der Maschinen in Betrieb ist und je mehr gleichartige Maschinen in Betrieb sind, desto mehr Datenmengen stehen für die Auswertung zum Bilden der vorbestimmten Muster zur Verfügung. Dies erhöht die Erkennung einer Manipulation signifikant.

Insbesondere umfasst die Mehrzahl M von Maschinen mehrere unterschiedliche Maschinen und/oder eine Kombination aus unterschiedlichen und gleichartigen Maschinen.

Die Mehrzahl M von Maschinen ist insbesondere über ein lokales und/oder ein externes Netzwerk miteinander verbunden, wobei innerhalb des lokalen oder externen Netzwerkes ein Leitstand oder eine Steuerungszentrale zum Steuern und/oder zur Übertragung von Daten angeordnet ist. Die Mehrzahl M von Maschinen umfasst insbesondere Maschinen, welche an unterschiedlichen Produktionsstandorten, wie unterschiedlichen Stadtteilen, Städten oder Staaten, angeordnet sind.

Gemäß einer weiteren Ausführungsform wird für die Mehrzahl M von Maschinen mittels der Schritte a) bis d) ermittelt, ob jeweils für eine Maschine aus der Mehrzahl M von Maschinen eine Aktion durchgeführt wird, in Abhängigkeit davon, ob das jeweilige Vergleichsergebnis angibt, dass eine Abweichung zwischen den übertragenen erfassten Maschinendaten der jeweiligen Maschine aus der Mehrzahl M der Maschinen und den bereitgestellten Referenzdaten für die jeweilige Maschine vorliegt.

Es ist insbesondere möglich, für jede Maschine aus der Mehrzahl M von Maschinen zu ermitteln, ob eine Manipulation während eines Arbeitsvorganges der jeweiligen Maschine durch den Benutzer vorliegt. Bei dem Vorliegen einer Manipulation kann dann zumindest eine Aktion für die jeweilige Maschine und deren jeweiligen Arbeitsvorgang, in dem die Manipulation auftritt, durchgeführt werden.

Vorzugsweise wird für einen Arbeitsvorgang gleichzeitig an jeder der Maschinen aus der Mehrzahl M von Maschinen, welche beispielsweise gleichartig sind, ermittelt, ob eine Manipulation dieses Arbeitsvorgangs an der jeweiligen Maschine vorliegt.

Gemäß einer weiteren Ausführungsform umfasst der Betrieb der Maschine zumindest eine Mehrzahl N von Arbeitsvorgängen, mit N ≥ 2, wobei die bereitgestellten Referenzdaten jeweils für einen einzelnen Arbeitsvorgang aus der Mehrzahl N von Arbeitsvorgängen ein vorbestimmtes Muster umfassen.

Vorzugsweise werden bei zumindest einer Maschine eine Mehrzahl N von Arbeitsvorgängen überwacht und für jeden Arbeitsvorgang aus der Mehrzahl N von Arbeitsvorgängen ermittelt, ob eine Manipulation dieses Arbeitsvorgangs vorliegt.

Gemäß einem zweiten Aspekt wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird eine Vorrichtung zum Erkennen einer Manipulation einer Maschine, insbesondere durch einen Benutzer, während eines Arbeitsvorganges der Maschine vorgeschlagen, wobei die Vorrichtung umfasst:
eine Erfassungs-Einheit zum Erfassen von Maschinendaten während des Arbeitsvorganges der Maschine,
eine Übertragungs-Einheit zum Übertragen der erfassten Maschinendaten von der Erfassungs-Einheit zu einer Speicher-Einheit,
die Speicher-Einheit zum Bereitstellen von Referenzdaten, wobei die Referenzdaten vorbestimmte Muster des Arbeitsvorganges der Maschine umfassen,
eine Vergleichs-Einheit zum Vergleichen der übertragenen erfassten Maschinendaten mit den bereitgestellten Referenzdaten, um ein Vergleichsergebnis zu erhalten, und
eine Durchführungs-Einheit zum Durchführen einer Aktion in Abhängigkeit davon, ob das Vergleichsergebnis angibt, dass eine Abweichung zwischen den übertragenen erfassten Maschinendaten und den bereitgestellten Referenzdaten vorliegt.

Gemäß einem vierten Aspekt wird ein System mit einer wie oben erläuterten Vorrichtung sowie mit einer als Cloud ausgebildeten Speicher-Einheit, welche extern zu der Vorrichtung angeordnet ist, vorgeschlagen.
Die für das vorgeschlagene Verfahren beschriebenen Ausführungsformen und Merkmale gelten für die vorgeschlagene Vorrichtung entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von weiteren Ausführungsformen unter Bezugnahme auf die beigelegten Figuren näher erläutert.
- Fig. 1: zeigt ein schematisches Ablaufdiagramm eines Ausführungsbeispiels eines Verfahrens zum Erkennen einer Manipulation;
- Fig. 2: zeigt ein schematisches Blockdiagramm einer Vorrichtung zum Erkennen einer Manipulation; und
- Fig. 3: zeigt ein schematisches Blockdiagramm eines Systems mit einer Vorrichtung zum Erkennen einer Manipulation.

In den Figuren sind gleiche oder funktionsgleiche Elemente mit denselben Bezugszeichen versehen worden, sofern nichts anderes angegeben ist.

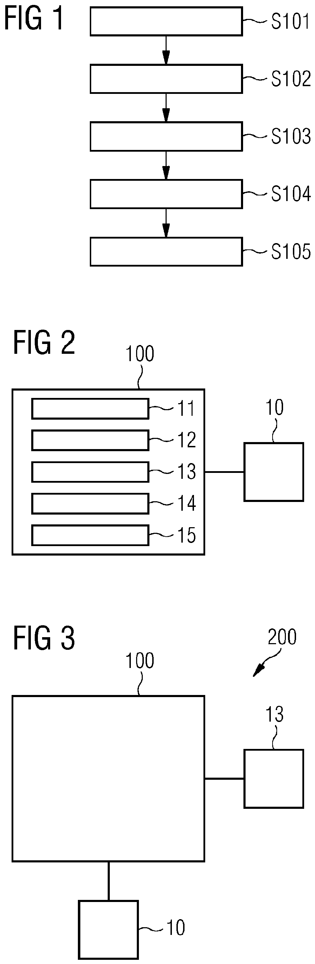

Fig. 1 zeigt ein schematisches Ablaufdiagramm eines Ausführungsbeispiels eines Verfahrens zum Erkennen einer Manipulation einer Maschine 10 (siehe Fig. 2), insbesondere durch einen Benutzer, während eines Arbeitsvorganges der Maschine 10.

Das Ausführungsbeispiel der Fig. 1 weist die folgenden Verfahrensschritte S101 bis S105 auf:
In dem Schritt S101 werden Maschinendaten während des Arbeitsvorganges der Maschine 10 mittels einer Erfassungs-Einheit 11 (siehe Fig. 2) erfasst.

Die Maschinendaten werden hierbei kontinuierlich während eines Betriebes der Maschine 10 mittels der Erfassungs-Einheit 11 erfasst. Ein Betrieb der Maschine 10 weist zumindest den Arbeitsvorgang auf.

In dem Schritt S102 werden die erfassten Maschinendaten von der Erfassungs-Einheit 11 zu einer Speicher-Einheit 13 (siehe Fig. 2) übertragen.

Weiter werden in dem Schritt S103 Referenzdaten mittels der Speicher-Einheit 13 bereitgestellt. Die Referenzdaten umfassen vorbestimmte Muster des Arbeitsvorganges der Maschine 10.

Der Betrieb der Maschine 10 umfasst zumindest eine Mehrzahl N von Arbeitsvorgängen, mit N ≥ 2. Dabei weisen die bereitgestellten Referenzdaten jeweils für einen einzelnen Arbeitsvorgang aus der Mehrzahl N von Arbeitsvorgängen ein vorbestimmtes Muster auf.

Als nächstes wird in dem Schritt S104 ein Vergleich der übertragenen erfassten Maschinendaten mit den bereitgestellten Referenzdaten durchgeführt, um ein Vergleichsergebnis zu erhalten.

In dem letzten Schritt S105 wird eine Aktion durchgeführt, in Abhängigkeit davon, ob das Vergleichsergebnis angibt, dass eine bestimmte Abweichung zwischen den übertragenen erfassten Maschinendaten und den bereitgestellten Referenzdaten vorliegt.

Die Aktion wird bei einem Vorliegen der bestimmten Abweichung durchgeführt. Die Aktion umfasst bei dem Vorliegen der bestimmten Abweichung ein Ausgeben einer Meldung an die Maschine 10 oder ein Unterbinden einer Freigabe eines Startes der Maschine 10. Ferner weist die Aktion bei dem Vorliegen der bestimmten Abweichung eine sofortige Abschaltung der Maschine 10 oder ein Protokollieren der Aktion oder ein Protokollieren der bestimmten Abweichung auf.

Die vorbestimmten Muster weisen zeitliche Muster, zumindest ein Betätigungs-Muster und zumindest ein korreliertes Muster auf.

Die zeitlichen Muster umfassen ein erstes zeitliches Muster, welches unterschiedliche Betätigungszeitpunkte der Maschine 10 durch einen Benutzer umfasst. Zusätzlich weisen die zeitlichen Muster ein zweites zeitliches Muster auf, welches unterschiedlichen Zustände von Maschinenelementen zu einem bestimmten Zeitpunkt umfasst. Das Betätigungs-Muster weist bestimmte Betätigungsreihenfolgen von Betätigungen von Maschinenelementen während zumindest des Arbeitsvorgangs auf. Das korrelierte Muster wird unter Verwendung zumindest eines zeitlichen Musters und zumindest eines Betätigungs-Musters gebildet.

Die vorbestimmten Muster werden durch Auswerten von in der Speicher-Einheit 13 (siehe Fig. 2) bereitgestellten historischen Maschinendaten oder aktuellen Maschinendaten gebildet. Zusätzlich können die vorbestimmten Muster durch selbstlernende Algorithmen gebildet werden, welche auf die historischen Maschinendaten oder aktuellen Maschinendaten angewendet werden.

Die historischen Maschinendaten oder die aktuellen Maschinendaten werden aus der Maschine 10 der Speicher-Einheit 13 bereitgestellt. Hierbei umfassen die bereitgestellten historischen Maschinendaten oder die bereitgestellten aktuellen Maschinendaten Sensordaten oder Aktuatordaten der Maschine 10.

Weiterhin ist es möglich, dass die historischen Maschinendaten oder die aktuellen Maschinendaten aus der Mehrzahl M von Maschinen 10, mit M ≥ 2, der Speicher-Einheit 13 zur Verfügung gestellt werden. Dabei weisen die bereitgestellten historischen Maschinendaten oder die bereitgestellten aktuellen Maschinendaten Sensordaten oder aber auch Aktuatordaten der Mehrzahl M von Maschinen 10 auf.

Zudem kann für eine Mehrzahl M von Maschinen 10 mittels der Schritte S101 bis S104 ermittelt werden, ob jeweils für eine Maschine 10 aus der Mehrzahl M von Maschinen 10 eine Aktion durchgeführt wird. Ob die Aktion durchgeführt wird, hängt davon ab, ob das jeweilige Vergleichsergebnis angibt, dass eine Abweichung zwischen den übertragenen erfassten Maschinendaten der jeweiligen Maschine 10 aus der Mehrzahl M der Maschinen 10 und den bereitgestellten Referenzdaten für die jeweilige Maschine vorliegt.

Fig. 2 zeigt ein schematisches Blockdiagramm einer Vorrichtung 100 zum Erkennen einer Manipulation einer Maschine 10, insbesondere durch einen Benutzer, während eines Arbeitsvorganges der Maschine 10. Die Vorrichtung 100 umfasst eine Erfassungs-Einheit 11, eine Übertragungs-Einheit 12, eine Speicher-Einheit 13, eine Vergleichs-Einheit 14 sowie eine Durchführungs-Einheit 15.

Die Erfassungs-Einheit 11 ist dazu eingerichtet, Maschinendaten während des Arbeitsvorganges der Maschine 10 zu erfassen.

Die Übertragungs-Einheit 12 ist dazu eingerichtet, die erfassten Maschinendaten von der Erfassungs-Einheit 11 zu der Speicher-Einheit 13 zu übertragen.

Weiterhin ist die Speicher-Einheit 13 dazu eingerichtet, Referenzdaten bereitzustellen. Die Referenzdaten umfassen vorbestimmte Muster des Arbeitsvorganges der Maschine 10.

Ferner ist die Vergleichs-Einheit 14 dazu eingerichtet, die übertragenen erfassten Maschinendaten mit den bereitgestellten Referenzdaten zu vergleichen, um ein Vergleichsergebnis zu erhalten.

Die Durchführungs-Einheit 15 ist dazu eingerichtet, eine Aktion durchzuführen, in Abhängigkeit davon, ob das Vergleichsergebnis angibt, dass eine Abweichung zwischen den übertragenen erfassten Maschinendaten und den bereitgestellten Referenzdaten vorliegt.

Fig. 3 zeigt ein schematisches Blockdiagramm eines Systems 200 mit einer Vorrichtung 100 zum Erkennen einer Manipulation, einer als Cloud ausgebildeten Speicher-Einheit 13 und einer Maschine 10.

Die Speicher-Einheit 13 ist insbesondere als eine lokale Speicher-Einheit 13 oder als eine externe Speicher-Einheit 13 ausgebildet.

In Fig. 3 ist die Speicher-Einheit 13 als Cloud ausgebildet, welche extern zu der Vorrichtung 100 angeordnet ist. Hierbei sind die Maschine 10 und die Vorrichtung 100 beispielweise lokal in einer Fabrik angeordnet. Die Speicher-Einheit 13 ist hierbei auf einer Cloud an einem Standort ausgebildet. Die in der Vorrichtung 100 erfassten Maschinendaten werden hierbei zu der externen Speicher-Einheit 13 (Cloud) über eine Kommunikationsstrecke übertragen.

Im Gegensatz dazu ist die Speicher-Einheit 13 in Fig. 2 als Teil der Vorrichtung 100 ausgebildet und somit als lokale Speicher-Einheit 13 mit der Maschine 10 oder der Maschinensteuerung verbunden, oder in der Nähe der Maschine 10 oder der Maschinensteuerung angeordnet.

Obwohl die vorliegende Erfindung anhand von Ausführungsbeispielen beschrieben wurde, ist sie vielfältig modifizierbar.

### Bezugszeichenliste

- 10: Maschine
- 11: Erfassungs-Einheit
- 12: Übertragungs-Einheit
- 13: Speicher-Einheit
- 14: Vergleichs-Einheit
- 15: Durchführungs-Einheit

- 100: Vorrichtung
- 200: System

- S101 bis S105: Verfahrensschritte

## Patentansprüche

1. Verfahren zum Erkennen einer Manipulation einer Maschine (10), insbesondere durch einen Benutzer, während eines Arbeitsvorganges der Maschine (10), mit den Schritten:
a) Erfassen (S101) von Maschinendaten während des Arbeitsvorganges der Maschine (10) mittels einer Erfassungs-Einheit (11),
b) Übertragen (S102) der erfassten Maschinendaten von der Erfassungs-Einheit (11) zu einer Speicher-Einheit (13),
c) Bereitstellen (S103) von Referenzdaten mittels der Speicher-Einheit (13), wobei die Referenzdaten vorbestimmte Muster des Arbeitsvorganges der Maschine (10) umfassen,
d) Vergleichen (S104) der übertragenen erfassten Maschinendaten mit den bereitgestellten Referenzdaten, um ein Vergleichsergebnis zu erhalten, und
e) Durchführen (S105) einer Aktion in Abhängigkeit davon, ob das Vergleichsergebnis angibt, dass eine bestimmte Abweichung zwischen den übertragenen erfassten Maschinendaten und den bereitgestellten Referenzdaten vorliegt.

2. Verfahren nach Anspruch 1,
**dadurch gekennzeichnet,**
**dass** die Aktion bei einem Vorliegen der bestimmten Abweichung durchgeführt wird, wobei die Aktion bei dem Vorliegen der bestimmten Abweichung ein Ausgeben einer Meldung an die Maschine (10), ein Unterbinden einer Freigabe eines Starts der Maschine (10), eine sofortige Abschaltung der Maschine (10) und/oder ein Protokollieren der Aktion und/oder der bestimmten Abweichung umfasst.

3. Verfahren nach Anspruch 1 oder 2,
**dadurch gekennzeichnet,**
**dass** die Maschinendaten in Schritt a) kontinuierlich während eines Betriebes der Maschine (10) mittels der Erfassungs-Einheit (11) erfasst werden, wobei der Betrieb der Maschine (10) zumindest den Arbeitsvorgang umfasst.

4. Verfahren nach einem der Ansprüche 1 bis 3,
**dadurch gekennzeichnet,**
**dass** die Speicher-Einheit (13) zum Speichern der erfassten Maschinendaten als eine lokale Speicher-Einheit (13) oder als eine externe Speicher-Einheit (13) ausgebildet ist, wobei die erfassten Maschinendaten von der Erfassungs-Einheit (11) zu der lokalen oder der externen Speicher-Einheit (13) über eine Kommunikationsstrecke übertragen werden.

5. Verfahren nach einem der Ansprüche 1 bis 4,
**dadurch gekennzeichnet,**
**dass** die vorbestimmten Muster zeitliche Muster umfassen, wobei die zeitlichen Muster ein erstes zeitliches Muster von unterschiedlichen Betätigungszeitpunkten der Maschine (10) durch einen Benutzer und/oder ein zweites zeitliches Muster von unterschiedlichen Zuständen von Maschinenelementen zu einem bestimmten Zeitpunkt aufweisen.

6. Verfahren nach einem der Ansprüche 1 bis 5,
**dadurch gekennzeichnet,**
**dass** die vorbestimmten Muster ein Betätigungs-Muster umfassen, welches bestimmte Betätigungsreihenfolgen von Betätigungen von Maschinenelementen während zumindest des Arbeitsvorgangs aufweist.

7. Verfahren nach den Ansprüchen 5 und 6,
**dadurch gekennzeichnet,**
**dass** die vorbestimmten Muster zumindest ein korreliertes Muster umfassen, welches unter Verwendung zumindest eines zeitlichen Musters und zumindest eines Betätigungs-Musters gebildet wird.

8. Verfahren nach einem der Ansprüche 1 bis 7,
**dadurch gekennzeichnet,**
**dass** die vorbestimmten Muster durch Auswerten von in der Speicher-Einheit (13) bereitgestellten historischen Maschinendaten und/oder aktuellen Maschinendaten und/oder durch Verwenden von selbstlernenden Algorithmen, welche auf die historischen Maschinendaten und/oder aktuellen Maschinendaten angewendet werden, gebildet werden.

9. Verfahren nach Anspruch 8,
**dadurch gekennzeichnet,**
**dass** die historischen Maschinendaten und/oder die aktuellen Maschinendaten zum Bilden der vorbestimmten Muster aus der Maschine (10) der Speicher-Einheit (13) bereitgestellt werden, wobei die bereitgestellten historischen Maschinendaten und/oder die bereitgestellten aktuellen Maschinendaten Sensordaten und/oder Aktuatordaten der Maschine umfassen.

10. Verfahren nach Anspruch 8,
**dadurch gekennzeichnet,**
**dass** die historischen Maschinendaten und/oder die aktuellen Maschinendaten zum Bilden der vorbestimmten Muster aus einer Mehrzahl M von Maschinen (10), mit M ≥ 2, der Speicher-Einheit (13) bereitgestellt werden, wobei die bereitgestellten historischen Maschinendaten und/oder die bereitgestellten aktuellen Maschinendaten Sensordaten und/oder Aktuatordaten der Mehrzahl M von Maschinen (10) umfassen.

11. Verfahren nach Anspruch 10,
**dadurch gekennzeichnet,**
**dass** für die Mehrzahl M von Maschinen (10) mittels der Schritte a) bis d) ermittelt wird, ob jeweils für eine Maschine (10) aus der Mehrzahl M von Maschinen (10) eine Aktion durchgeführt wird, in Abhängigkeit davon, ob das jeweilige Vergleichsergebnis angibt, dass eine Abweichung zwischen den übertragenen erfassten Maschinendaten der jeweiligen Maschine (10) aus der Mehrzahl M der Maschinen (10) und den bereitgestellten Referenzdaten für die jeweilige Maschine vorliegt.

12. Verfahren nach einem der Ansprüche 3 bis 9,
**dadurch gekennzeichnet,**
**dass** der Betrieb der Maschine (10) zumindest eine Mehrzahl N von Arbeitsvorgängen umfasst, mit N ≥ 2, wobei die bereitgestellten Referenzdaten jeweils für einen einzelnen Arbeitsvorgang aus der Mehrzahl N von Arbeitsvorgängen ein vorbestimmtes Muster umfassen.

13. Computerprogrammprodukt, welches auf einer programmgesteuerten Einrichtung die Durchführung des Verfahrens nach einem der Ansprüche 1 bis 12 veranlasst.

14. Vorrichtung (100) zum Erkennen einer Manipulation einer Maschine (10), insbesondere durch einen Benutzer, während eines Arbeitsvorganges der Maschine (10), umfassend:
eine Erfassungs-Einheit (11) zum Erfassen von Maschinendaten während des Arbeitsvorganges der Maschine (10),
eine Übertragungs-Einheit (12) zum Übertragen der erfassten Maschinendaten von der Erfassungs-Einheit (11) zu einer Speicher-Einheit (13),
eine Speicher-Einheit (13) zum Bereitstellen von Referenzdaten, wobei die Referenzdaten vorbestimmte Muster des Arbeitsvorganges der Maschine (10) umfassen,
eine Vergleichs-Einheit (14) zum Vergleichen der übertragenen erfassten Maschinendaten mit den bereitgestellten Referenzdaten, um ein Vergleichsergebnis zu erhalten, und
eine Durchführungs-Einheit (15) zum Durchführen einer Aktion in Abhängigkeit davon, ob das Vergleichsergebnis angibt, dass eine Abweichung zwischen den übertragenen erfassten Maschinendaten und den bereitgestellten Referenzdaten vorliegt.

15. System (200) mit einer Vorrichtung (100) nach Anspruch 14 und mit einer als Cloud ausgebildeten Speicher-Einheit (13), welche extern zu der Vorrichtung (100) angeordnet ist.
